(19) Europäisches Patentamt
European Patent Office
Office européen des brevets

(11) Veröffentlichungsnummer: **0 249 097**
**A2**

(12) # EUROPÄISCHE PATENTANMELDUNG

(21) Anmeldenummer: **87107780.6**

(22) Anmeldetag: **29.05.87**

(51) Int. Cl.⁴: **A61G 3/00**

(30) Priorität: **12.06.86 DE 3619763**

(43) Veröffentlichungstag der Anmeldung:
**16.12.87 Patentblatt 87/51**

(84) Benannte Vertragsstaaten:
**AT CH DE FR GB IT LI NL SE**

(71) Anmelder: **Binz GmbH & Co**
**Postfach 1120**
**Zollstrasse 2 D-7073 Lorch(DE)**

(72) Erfinder: **Die Erfinder haben auf ihre Nennung verzichtet**

(74) Vertreter: **Dipl.-Phys.Dr. Manitz Dipl.-Ing. Finsterwald Dipl.-Ing. Grämkow Dipl.-Chem.Dr. Heyn Dipl.-Phys. Rotermund Morgan, B.Sc.(Phys) Seelbergstrasse 23/25 D-7000 Stuttgart 50(DE)**

(54) **Krankentransport-bzw. Rettungsfahrzeug.**

(57) Im Krankentransport-bzw. Rettungsfahrzeug ist ein Sauerstofferzeuger (4) angeordnet, mit dem Sauerstoff bzw. ein mit Sauerstoff stark angereichertes Gasgemisch aus der Luft abgetrennt werden kann. Damit können ständig auf ihren Füllstand zu überprüfende Sauerstoff-Flaschen für die Beatmung od.dgl. des transportierten Patienten erübrigt werden.

EP 0 249 097 A2

## Krankentransport-bzw. Rettungsfahrzeug

Die Erfindung betrifft ein Krankentransport-bzw. Rettungsfahrzeug mit einer Vorrichtung zur Versorgung bzw. Beatmung eines zu transportierenden Patienten mit Sauerstoff.

Bei herkömmlichen Krankentransport-bzw. Rettungsfahrzeugen wird der für den Bedarf der Notfallversorgung eines Patienten notwendige Sauerstoff in Flaschen mitgeführt. Um den Flascheninhalt jeweils völlig aufbrauchen zu können, werden jeweils zwei Flaschen mitgeführt, von denen eine, als Reserve, vollständig gefüllt ist, während der Inhalt der jeweils anderen Flasche mehr oder weniger weit angebrochen sein darf. Grundsätzlich muß der Inhalt der Flaschen laufend überprüft werden, um sicherzustellen, daß auch für eine längere Beatmung genügend Sauerstoff vorhanden ist.

Aufgrund der Notwendigkeit, die Sauerstoff-Flaschen regelmäßig nach Verbrauch ihres Inhaltes gegen nachgefüllte Flaschen auszutauschen bzw. hinsichtlich ihres Füllstandes zu kontrollieren, müssen die Flaschen an relativ leicht zugänglichen Plätzen im Fahrzeug untergebracht werden. Dies kann aber dazu führen, daß für andere, häufiger benutzte medizinische Geräte nur relativ wenig Raum an gut zugänglichen Orten im Fahrzeug zur Verfügung steht.

Deshalb ist es Aufgabe der Erfindung, ein Krankentransport-bzw. Rettungsfahrzeug mit Sauerstoffversorgung zu schaffen, deren Komponenten auch an weniger leicht zugänglichen Plätzen im Fahrzeug untergebracht werden können.

Diese Aufgabe wird dadurch gelöst, daß im Fahrzeug ein Sauerstofferzeuger angeordnet ist, welcher aus der Luft - z.B. mittels sogenannter Ultrafiltration - Sauerstoff bzw. ein Gasgemisch mit gegenüber Luft stark erhöhtem Sauerstoffanteil, welcher im Falle der Ultrafiltration je nach der Art der verwendeten Membranen bei bis zu ca. 98 % liegen kann, abzutrennen gestattet.

Die Erfindung beruht also auf dem allgemeinen Gedanken, im Krankentransport-bzw. Rettungsfahrzeug nicht lediglich einen ständig zu überprüfenden Sauerstoffvorrat mitzuführen. Vielmehr ist das erfindungsgemäße Fahrzeug mit Aggregaten für eine Sauerstofferzeugung ausgerüstet.

Derartige Sauerstofferzeuger sind prinzipiell bekannt und wurden auch schon bereits in Krankenhäusern eingesetzt. Diese Geräte arbeiten in der Regel mit sogenannter Ultrafiltration, bei der die normale atmosphärische Luft mit hohem Druck durch spezielle Membranen gepreßt wird, deren Material eine stark unterschiedliche Wechselwirkung mit den Bestandteilen der Luft aufweist und beispielsweise den Sauerstoff der Luft nicht bzw. nur geringfügig, die anderen Luftbestandteile dagegen stark adsorbiert bzw. absorbiert und dementsprechend nur den Sauerstoff bzw. ein Gasgemisch mit stark erhöhtem Sauerstoffanteil hindurchläßt.

Entsprechende Sauerstofferzeuger können über längere Zeit ohne Wartungsarbeit arbeiten. Dies beruht im Falle der Ultrafiltration unter anderem darauf, daß sich die Membranen regenerieren lassen, indem die Richtung des Durchsatzes umgekehrt wird, d.h. indem der Sauerstoff bzw. das mit Sauerstoff stark angereicherte Gasgemisch die Membran zeitweise von der einen zur anderen und zeitweise von der anderen zur einen Seite hin durchsetzt. Aufgrund des dementsprechend relativ geringen Wartungsaufwandes ist die Möglichkeit gegeben, wesentliche Teile des Sauerstofferzeugers an relativ schwer zugänglichen Plätzen im Fahrzeug bzw. an solchen Orten unterzubringen, die bisher für medi zinische Geräte ungeeignet waren. Dadurch wird des weiteren die vorteilhafte Möglichkeit geschaffen, den Sauerstofferzeuger in Fahrzeuglängsrichtung vor dem Krankentransportraum unterzubringen, um eine günstige Gewichtsverteilung im Fahrzeug zu erzielen. Insbesondere kann der Sauerstofferzeuger im Motorraum oder auch im Bereich der Fahrerkabine angeordnet werden, beispielsweise unter den Sitzen von Fahrer und Beifahrer oder in einem Dachraum oberhalb der Fahrer-und Beifahrerplätze.

Eine besonders kostengünstige Lösung wird erreicht, wenn der Sauerstofferzeuger gemäß einer besonders bevorzugten Ausführungsform der Erfindung mit einem nachgeschalteten Speicher für den Sauerstoff bzw. das mit Sauerstoff stark angereicherte Gasgemisch kombiniert ist, wobei die Kapazität des Speichers durch einen zweckmäßigerweise zwischen den Sauerstofferzeuger und den Speicher geschalteten Kompressor erhöht werden kann, welcher den erzeugten Sauerstoff bzw. das mit Sauerstoff stark angereicherte Gasgemisch stark verdichtet.

Aufgrund des Speichers genügt die Anordnung eines Sauerstofferzeugers, dessen Leistungsfähigkeit an sich nicht ausreicht, um den jeweils für einen Patienten benötigten Sauerstoff unmittelbar bei der Notfallversorgung des Patienten zu erzeugen. Vielmehr genügt es, einen verhältnismäßig kleinen Sauerstofferzeuger anzuordnen, dessen Leistungsfähigkeit so bemessen ist, daß der Speicher bei Betrieb des Sauerstofferzeugers außerhalb der eigentlichen Einsatzzeiten des Rettungs-bzw. Krankentransportfahrzeuges vollständig aufgefüllt wird. Die Tatsache, daß ein Krankentransport-bzw. Rettungsfahrzeug schon wegen der nach den Einsätzen jeweils notwendigen Reinigung nicht ständig eingesetzt werden kann, läßt sich also mit Vorteil dahin gehend ausnutzen, daß ein relativ preisgünstiger Sauerstofferzeuger mit verminderter Leistungsfähigkeit verwendet wird.

In diesem Zusammenhang ist zweckmäßig, wenn der Antrieb des Sauerstofferzeugers sowie der damit zusammenwirkenden Aggregate, wie z.B. Kompressor, Luftgebläse od.dgl., mittels eines im Fahrzeug angeordneten Elektromotors erfolgt, welcher - vorzugsweise unmittelbar - an das örtliche Stromnetz anschließbar ist, um einen Betrieb des Sauerstofferzeugers außerhalb der Einsatzzeiten des Fahrzeuges ohne Betrieb des Fahrzeugmotors zu ermöglichen.

Zum Betrieb des Sauerstofferzeugers während eines Fahrzeugeinsatzes kann im Fahrzeug eine vom Fahrzeugmotor antreibbare Spannungsquelle angeordnet sein, welche eine dem öffentlichen Stromnetz entsprechende Spannung liefert.

Beispielsweise kann im Fahrzeug ein vom Fahrzeugmotor unmittelbar, über Keilriemen od.dgl., angetriebener Wechselstromgenerator angeordnet sein. Stattdessen ist es auch möglich, eine Spannungswandlerschaltung anzuordnen, welche die Gleichspannung der Fahrzeugbatterie in eine dem öffentlichen Stromnetz entsprechende Wechselspannung umsetzt. Des weiteren besteht die Möglichkeit, einen an den Bordgenerator des Fahrzeuges bzw. die Fahrzeugbatterie anschließbaren Elektromotor vorzusehen, welcher seinerseits einen Wechselstromgenerator zur Erzeugung einer dem öffentlichen Stromnetz entsprechenden Wechselspannung antreibt.

Als Notreserve kann im Fahrzeug noch eine Sauerstoff-Flasche mitgeführt werden, welche bevorzugt an eine den Sauerstofferzeuger bzw. dessen Speicher mit Beatmungsgeräten, -masken od.dgl. verbindenden Sauerstoffleitung anschließbar bzw. angeschlossen ist.

Da die dem Sauerstofferzeuger zugeführte Luft vorgereinigt sein sollte, kann es vorteilhaft sein, wenn dem Sauerstofferzeuger gemäß einer weiteren zweckmäßigen Ausführungsform der Erfindung zur Reinigung der zugeführten Luft eine Filteranordnung vorgeschaltet ist, welche auch den Krankentransportraum und/oder die Fahrerkabine des Fahrzeuges mit gereinigter Luft zu beliefern vermag.

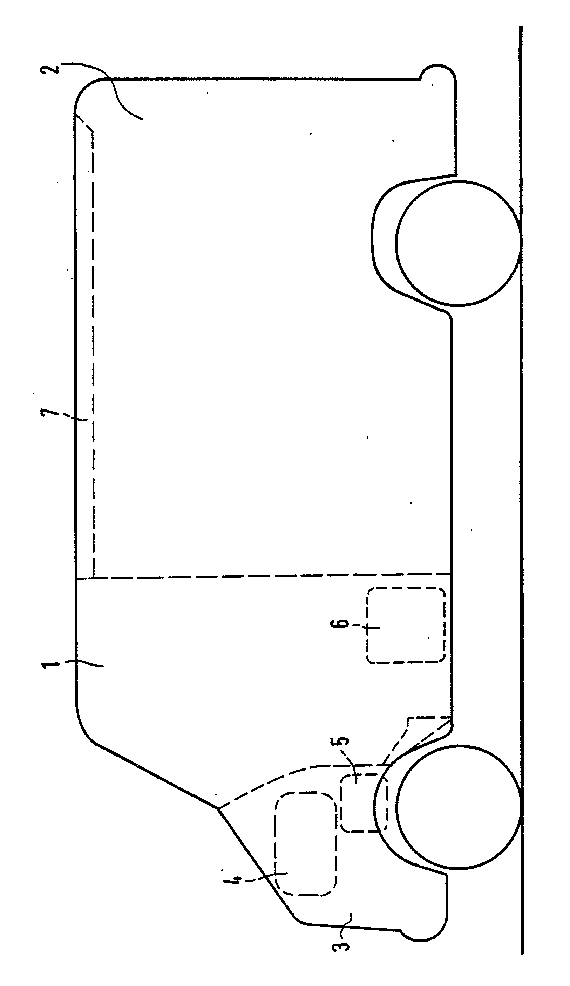

Nachfolgend wird die Erfindung noch anhand der Zeichnung erläutert. Dabei zeigt die einzige Figur eine schematisierte Seitenansicht eines entsprechend der Erfindung ausgestatteten Rettungsfahrzeuges.

Das Rettungsfahrzeug besitzt einen von der Fahrerkabine 1 durch eine Innenwand abgeteilten Krankentransportraum 2, welcher in grundsätzlich bekannter Weise die Durchführung von Notfallmaßnahmen am Patienten während der Fahrt gestattet.

Im Motorraum 3 ist eine Klimaanlage (nicht dargestellt) mit vorgeschalteter Filteranordnung untergebracht, um die Fahrerkabine 1 und/oder den Krankentransportraum 2 mit gereinigter Luft zu versorgen. Des weiteren ist im Motorraum 3 ein Sauerstofferzeuger 4 untergebracht, welcher, beispielsweise über das Filter der Klimaanlage, vorgereinigte Luft erhält und den darin enthaltenen Sauerstoff abtrennt. Der erzeugte Sauerstoff bzw. das mit Sauerstoff stark angereicherte erzeugte Gasgemisch wird mittels eines nachgeschalteten Kompressors 5 einem Speicher 6 zugeführt, welcher beispielsweise im Raum unter den Sitzen in der Fahrerkabine untergebracht sein kann. Von diesem Speicher 6 führen nicht dargestellte Sauerstoffleitungen zu Sauerstoffmasken und ähnlichen Geräten, welche bei Einsetzen des Fahrzeuges ständig mit den Sauerstoffleitungen verbunden bleiben und bei Nichtgebrauch in Deckenbehältern 7 od.dgl. oberhalb des zu transportierenden Patienten griffbereit untergebracht sein können.

Abweichend von der dargestellten Anordnung kann der Sauerstofferzeuger 4 auch im Krankentransportraum 2 untergebracht sein. Bei dieser Anordnung lassen sich die Bedienungs-und Einstellorgane unmittelbar am Erzeuger 4 anordnen. Als Platz für die Unterbringung sind beispielsweise für andere Geräte kaum nutzbare Bereiche des Krankentransportraumes 2 nahe eines Betreuersitzes bei der Trennwand geeignet.

Entsprechendes gilt auch für den Speicher 6, für den auch schwer zugängliche Plätze ohne weiteres geeignet sind, z.B. Eckbereiche von Schrankeinbauten im Krankentransportraum, weil am Speicher 6 keine bzw. keine wesentlichen Bedienungsorgane zugänglich sein müssen.

## Ansprüche

1. Krankentransport-bzw. Rettungsfahrzeug mit einer Vorrichtung zur Versorgung bzw. Beatmung eines zu transportierenden Patienten mit Sauerstoff, dadurch gekennzeichnet daß im Fahrzeug ein Sauerstofferzeuger (4) angeordnet ist, welcher aus der Luft - z.B. mittels Ultrafiltration - Sauerstoff bzw. ein Gasgemisch mit gegenüber Luft stark erhöhtem Sauerstoffanteil (von z.B. mehr als 90 %) abzutrennen gestattet.

2. Fahrzeug nach Anspruch 1, dadurch gekennzeichnet, daß dem Sauerstofferzeuger (4) ein Speicher (6) nachgeschaltet ist, dem der Sauerstoff bzw. das mit Sauerstoff angereicherte Gasgemisch zuführbar ist.

3. Fahrzeug nach Anspruch 2, dadurch gekennzeichnet, daß zwischen Sauerstofferzeuger (4) und Speicher (6) ein Kompressor (5) angeordnet ist.

4. Fahrzeug nach einem der Ansprüche 1 bis 3, dadurch gekennzeichnet, daß der Antrieb des Sauerstofferzeugers sowie damit zusammenwirkender Aggregate, wie z.B. Kompressor, Luftgebläse od.dgl., mittels eines im Fahrzeug angeordneten Elektromotors erfolgt, welcher - vorzugsweise unmittelbar - an das örtliche Stromnetz anschließbar ist.

5. Fahrzeug nach einem der Ansprüche 1 bis 4, dadurch gekennzeichnet, daß im Fahrzeug ein vom Fahrzeugmotor antreibbarer Spannungserzeuger angeordnet ist, welcher eine dem öffentlichen Stromnetz entsprechende Spannung liefert.

6. Fahrzeug nach einem der Ansprüche 1 bis 5, dadurch gekennzeichnet, daß der Fahrzeugmotor unmittelbar einen Wechselstromgenerator für eine dem öffentlichen Stromnetz entsprechende Wechselspannung antreibt.

7. Fahrzeug nach einem der Ansprüche 1 bis 5, dadurch gekennzeichnet, daß der Fahrzeugmotor einen Bordgenerator zur Belieferung eines elektrischen Bordnetzes bzw. einer Fahrzeugbatterie mit elektrischer Spannung bzw. elektrischem Strom antreibt und daß ein an das Bordnetz anschließbarer Elektromotor einen Wechselstromgenerator für eine dem öffentlichen Stromnetz entsprechende Wechselspannung treibt.

8. Fahrzeug nach einem der Ansprüche 1 bis 5, dadurch gekennzeichnet, daß im Fahrzeug eine Spannungswandlerschaltung angeordnet ist, welche an das elektrische Bordnetz des Fahrzeuges angeschlossen ist und eine der öffentlichen Stromversorgung entsprechende Wechselspannung erzeugt.

9. Fahrzeug nach einem der Ansprüche 1 bis 8, dadurch gekennzeichnet, daß dem Sauerstofferzeuger (4) zur Reinigung der zugeführten Luft eine Filteranordnung vorgeschaltet ist, die auch den Krankentransportraum (2) und/oder die Fahrerkabine (1) mit gereinigter Luft beliefert.

10. Fahrzeug nach einem der Ansprüche 1 bis 8, dadurch gekennzeichnet, daß der Sauerstofferzeuger (4) in Fahrzeuglängsrichtung vor dem Krankentransportraum (2) untergebracht ist - insbesondere im Motorraum oder im Bereich der Fahrerkabine.

11. Fahrzeug nach einem der Ansprüche 1 bis 10, dadurch gekennzeichnet, daß eine Sauerstoff-Flasche an eine den Sauerstofferzeuger (4) bzw.

den Speicher (6) mit Beatmungsgeräten, -masken od.dgl. verbindende Sauerstoffleitung im Fahrzeug anschließbar bzw. angeschlossen ist.

12. Fahrzeug nach einem der Ansprüche 1 bis 11, dadurch gekennzeichnet, daß der Sauerstofferzeuger (4) und/oder der Speicher (6) im Krankentransportraum (2) untergebracht sind, insbesondere in relativ schwer zugänglichen und für andere Zwecke nicht nutzbaren Bereichen dieses Raumes (2) bzw. einer dort untergebrachten Schrankwand od.dgl.

0 249 097

L 196